# EUROPÄISCHE PATENTSCHRIFT

(11) **EP 1 034 384 B1**
(45) Veröffentlichungstag und Bekanntmachung des Hinweises auf die Patenterteilung: **06.02.2002**
(21) Anmeldenummer: 98965173.2
(22) Anmeldetag: 23.11.1998
(51) Int. Cl.: F16H 37/04, F16H 63/44

(54) **12-GANG-SCHALTGETRIEBE IN 2X3X2-BAUWEISE**
12-SPEED GEAR BOX WITH A 2X3X2 CONSTRUCTION
BOITE DE VITESSES A 12 RAPPORTS EN VERSION 2X3X2

(30) Priorität: 29.11.1997 DE 19753061
(43) Veröffentlichungstag der Anmeldung: 13.09.2000
(73) Patentinhaber: ZF FRIEDRICHSHAFEN Aktiengesellschaft, 88038 Friedrichshafen (DE)
(72) Erfinder: NITZSCHKE, Rüdiger, D-88080 Langenargen (DE); SCHEPPERLE, Bernd, D-78464 Konstanz (DE)
(86) Internationale Anmeldenummer: EP9807561
(87) Internationale Veröffentlichungsnummer: WO9928654

(56) Entgegenhaltungen:
- EP-A- 0 317 094
- GB-A- 2 108 603

## Beschreibung

Die Erfindung bezieht sich auf ein 12-Gang-Schaltgetriebe für Nutzfahrzeuge (z.B. aus EP-A-0 317 094 bekannt) in 2x3x2-Bauweise gemäss dem Oberbegriff des Patentanspruches 1.

Derartige 12-Gang-Schaltgetriebe bestehen aus einer Vorschalt- oder Splitgruppe, einer 3-Gang-Hauptgruppe und einer Nachschalt- bzw. Bereichsgruppe, wobei die einzelnen Gruppen pneumatisch oder manuell betätigte Schalteinrichtungen aufweisen. Üblicherweise werden hierbei die Vorschalt- und die Nachschaltgruppe pneumatisch betätigt, während die Hauptgruppe manuell geschaltet wird. Für diese manuelle Schaltung werden Schalteinrichtungen verwendet, die von 16-Gang-Getriebe übernommen werden, wobei sich dann jedoch ein Schaltbild mit einer Schaltlücke einstellt, d. h. dass dieses Schaltbild kein zügiges Durchschalten der Gänge in jeweils in der Richtung abwechselnden Schaltbewegungen ermöglicht. Vom dritten in den vierten Gang muss nämlich der Schalthebel nach Herausführen aus dem dritten Gang wieder in die gleiche Richtung wie der dritte Gang geschaltet werden, wonach anschliessend erst der fünfte Gang in einer gegenläufigen Bewegung eingeschaltet werden kann. Hierdurch bildet sich zwischen dem zweiten und fünften Gang die besagte Schaltlücke. Ein solches Schaltbild ist vom Bewegungsablauf unlogisch und erschwert die Bedienung der Schalteinrichtung bzw. ist zumindest ungewohnt.

Es ist daher Aufgabe der Erfindung, ein 12-Gang-Getriebe in 2x3x2-Bauweise so zu modifizieren, dass ein herkömmliches logisches Schaltbild ohne Schaltlücke erreicht wird.

Diese Aufgabe ist gemäss der Erfindung durch die Merkmale des Patentanspruches 1 gelöst.

Demgemäss wird entgegen dem Stand der Technik nicht die 3-Gang-Hauptgruppe manuell und die Split- bzw. Vorschalt- und die Bereichs- bzw. Nachschaltgruppe automatisch pneumatisch geschaltet, sondern es wird nur die Vorschaltgruppe manuell geschaltet, wohingegen die beiden anderen Gruppen automatisch pneumatisch geschaltet werden. Die pneumatischen Schalteinrichtungen für die Hauptgruppe und die Nachschaltgruppe werden beim manuellen Wechsel von einer Gangstufe zu der nächsten Gangstufe aktiviert.

Vorzugsweise ist hierbei für die Vorschaltgruppe eine manuell zu betätigende Schalteinrichtung mit Gassen für sechs Vorwärtsgänge und zumindest einen Rückwärtsgang vorgesehen, die bei kontinuierlich an- bzw. absteigender Gangfolge abwechselnd auf die zwei Gangstufen der Vorschaltgruppe zugreift. Für die Hauptgruppe und die Nachschaltgruppe sind pneumatische Schalteinrichtungen vorgesehen, die beim Wählen der manuellen Schalteinrichtung in die Gasse des gewünschten Ganges entsprechend aktiviert werden. Das damit erzielte Schaltbild entspricht dem eines üblichen 6-Gang-Schaltgetriebes mit zusätzlich einem oder zwei Rückwärtsgängen. Zum Schalten der Vorwärtsgänge betätigt etwa der Schalthebel der Schalteinrichtung abwechselnd die zwei Gangstufen der Vorschaltgruppe, wobei bei jedem Wechsel einer Gangstufe ein Synchronisierungspaket der Hauptgruppe pneumatisch aktiviert wird. Entscheidend ist, dass für jeweils zwei gegenüberliegene Gänge, so z. B. den ersten und zweiten, den dritten und vierten und den fünften und sechsten Gang jeweils die gleiche Gangstufe der Hauptgruppe pneumatisch aktiviert wird. Die weitere pneumatische Umschaltung von den jeweiligen Langsam- auf die Schnellstufen der einzelnen Gänge erfolgt dann über die Nachschaltgruppe.

Weitere Ausgestaltungen der Erfindung gehen aus den Unteransprüchen hervor.

Die Erfindung ist in einem Ausführungsbeispiel anhand der Zeichnung näher erläutert.
In dieser stellen dar:
- Fig. 1A, B und C: Schaltbilder eines herkömmlich geschalteten 12-Gang-Getriebes in 2x3x2-Bauweise, das gewünschte Schaltbild für ein solches Getriebe und das Schaltbild für ein 12-Gang-Getriebe gemäss der Erfindung mit einer schematischen Darstellung der jeweils geschalteten Gangstufe;
- Fig. 2: schematisch die Darstellung des Radsatz-Aufbaues eines 12-Gang-Getriebes mit einer Schalteinrichtung gemäss der Erfindung und
- Fig. 3: ein Diagramm zur Darstellung der einzelnen Schaltstufen sowie der entsprechenden Aktivierung von Synchronisierungspakten in dem Getriebe.

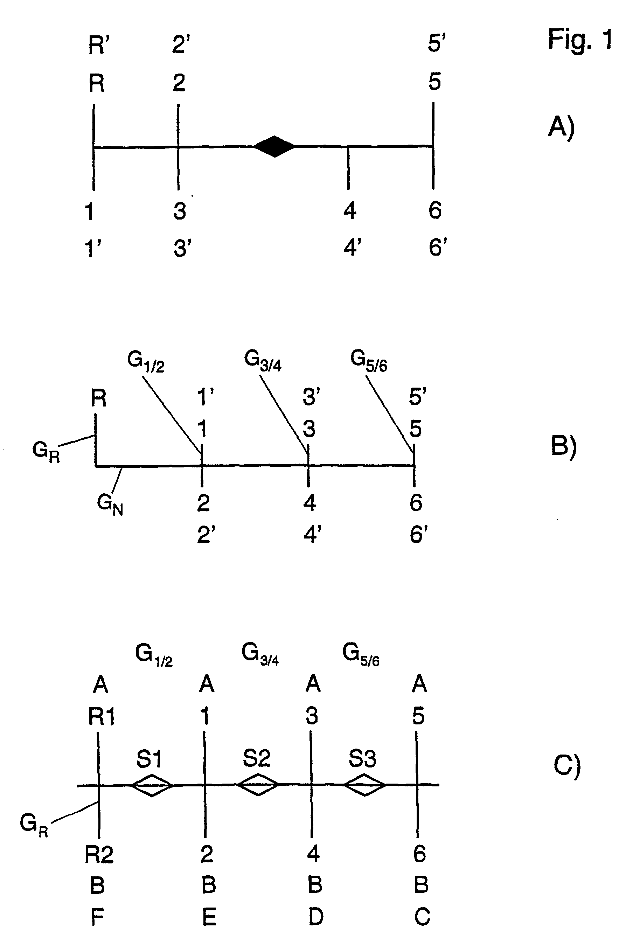

In Fig. 1A ist das oben bereits beschriebene unlogische und nicht ergonomische Schaltbild eines 12-Gang-Getriebes in 2x3x2-Bauweise dargestellt, bei dem die manuelle Schalteinrichtung auf die 3-Gang-Hauptgruppe zugreift und die Vorschaltgruppe und die Nachschaltgruppe pneumatisch geschaltet werden. Die Ganglücke zwischen dem zweiten und fünften Gang ist deutlich zu erkennen.

In Fig. 1B ist das gewünschte Schaltbild mit einem Rückwärtsgang dargestellt, wobei davon ausgegangen wird, dass die Gangstufen 1 bis 6 manuell geschaltet werden und die Gangstufen 1' bis 6' als Schnell-Stufen der einzelnen Gänge pneumatisch durch die Bereichsgruppe geschaltet werden. Das Schaltbild weist hierbei Gassen G_{R} für den Rückwärtsgang, G_{1/2} für die erste und zweite Gangstufe, G_{3/4} für die dritte und vierte Gangstufe und G_{5/6} für die fünfte und sechste Gangstufe auf. Die Gassen werden durch eine Neutralgasse G_{N} miteinander quer verbunden. In der Neutralgasse liegen, wie in Fig. 1C angedeutet, Aktivierungs- bzw. Schalteinrichtungen zwischen den einzelnen Gassen, nämlich die Aktivierungseinrichtung S1 zwischen der Gasse für die hier zwei Rückwärtsgänge R1, R2 und der Gasse für die erste und zweite Gangstufe, die Aktivierungseinrichtung S2 zwischen der Gasse für die erste und zweite Gangstufe und der Gasse für die dritte und vierte Gangstufe sowie die Aktivierungseinrichtung S3 zwischen der Gasse für die dritte und vierte und der Gasse für die fünfte und sechste Gangstufe.

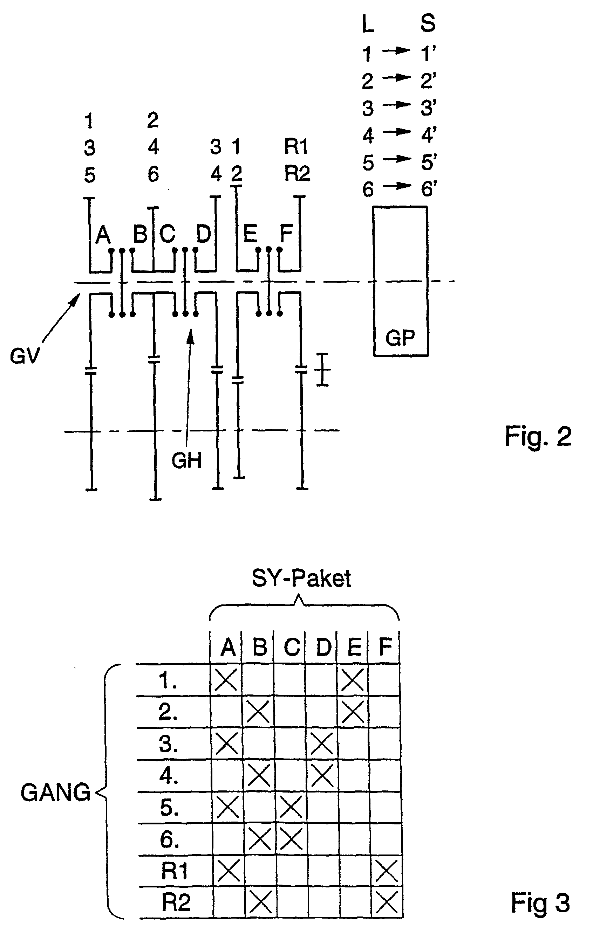

In Fig. 2 ist der Radsatzaufbau des zugeordneten Getriebes dargestellt. In der Vorschaltgruppe GV sind zwei Gangstufen für die Schaltungen des ersten bis sechsten Ganges mit den zugehörigen zwei Synchronisierungspaketen A, B dargestellt. An diese Gruppe schliesst sich die 3-Gang-Hauptgruppe GH an mit den Synchronisierungspaketen C, D sowie den mit den Rückwärtsgängen R1 und R2 gemeinsamen Paketen E und F. Daran schliesst sich die Nachschaltgruppe GP an.

In Fig. 3 ist für das oben in Fig. 1C angegebene Schaltschema ein Diagramm für die Vorwärtsgänge 1 bis 6 und die beiden Rückwärtsgänge R1 und R2 mit den zugehörigen aktivierten Synchronisierungspaketen dargestellt.

Es soll nun ein Schaltvorgang vom Rückwärtsgang bis zum sechsten Gang beschrieben werden. Vom Rückwärtsgang, hier dem zweiten Rückwärtsgang R2, befindet sich der Schalthebel in der Gasse G_{R} für die beiden Rückwärtsgänge. Die manuelle Schalteinrichtung steht hierbei in Eingriff mit dem Synchronisierungspaket B in der Vorschaltgruppe; pneumatisch aktiviert ist das Synchronisierungspaket F. Beim Führen des Schalthebels in die neutrale Gasse G_{N} in Richtung auf den ersten Gang wird zunächst der Eingriff in das Synchronisierungspaket B gelöst und anschliessend durch die Aktivierungseinrichtung S1 das Synchronisierungspaket E in der Hauptgruppe G_{H} pneumatisch aktiviert. Der Ganghebel wird dann in der Gasse G_{1/2} manuell in die Stellung des ersten Ganges geführt, wodurch das Synchronisierungspaket A zur Wirkung kommt. Damit ist der erste Gang geschaltet, die Synchronisierungspakete A und E sind in Funktion. Üblicherweise wird dadurch die Langsam-Stufe L des ersten Ganges geschaltet; eine automatische Schaltung auf die Schnell-Stufe S erfolgt dann automatisch pneumatisch durch die Nachschaltgruppe GP, wie in Fig. 2 angedeutet.

Für den Übergang in den zweiten Gang wird der Schalthebel in der Gasse G_{1/2} in Richtung auf den zweiten gegenüberliegenden Gang geführt, wodurch das Synchronisierungspaket A ausser Funktion und das Synchronisierungspaket B der Vorschaltgruppe in Funktion tritt. Das Synchronisierungspaket E der Hauptgruppe GH bleibt weiter aktiviert. Eine Schaltung von der langsamen Stufe L des zweiten Ganges in die Schnellstufe 2' erfolgt wiederum pneumatisch gesteuert durch die Nachschaltgruppe GP.

Soll in den dritten Gang geschaltet werden, so wird der Schalthebel in die Neutralgasse G_{N} geführt, wodurch das Synchronisierungspaket B der Vorschaltgruppe ausser Funktion gelangt. Beim Führen des Schalthebels in der Neutralgasse in Richtung auf die Gasse G_{3/4} wird über die Aktivierungseinrichtung S2 das Synchronisierungspaket E ausser Funktion und das Synchronisierungspaket D der Hauptgruppe GH in Funktion gesetzt. Beim Einschalten des dritten Ganges wird wiederum das Synchronisierungspaket A der Vorschaltgruppe in Funktion gesetzt, so dass nunmehr die Schaltung des dritten Ganges beendet ist. Eine Umschaltung in die Schnellstufe erfolgt wiederum durch die Nachschaltgruppe GP.

Bei der Schaltung in den vierten Gang wird der Schalthebel in der Gasse G_{3/4} in die vierte Gangstufe geführt, wodurch in der Vorschaltgruppe das Synchronisierungspaket A ausser Funktion und das Synchronisierungspaket B in Funktion gesetzt wird. Das Synchronisierungspaket D der Hauptgruppe bleibt weiterhin in Funktion. Die Umschaltung von der Langsam-Stufe L in die Schnell-Stufe S des vierten Ganges erfolgt wiederum pneumatisch gesteuert durch die Nachschaltgruppe E.

Beim Schalten in den fünften bzw. sechsten Gang wiederholt sich diese Funktion immer so, dass zunächst das Synchronisierungspaket B ausser Funktion und über die Aktivierungseinrichtung S3 das Synchronisierungspaket A der Vorschaltgruppe und das Synchronisierungspaket C der Hauptgruppe GH in Funktion gesetzt werden. Für die Schaltung des sechsten Ganges in der Gasse G_{5/6} wird auf das Synchronisierungspaket B der Vorschaltgruppe geschaltet, das Synchronisierungspaket C der Hauptgruppe bleibt weiterhin eingeschaltet. Eine Umschaltung von der Langsam- in die Schnell-Stufe erfolgt wiederum pneumatisch gesteuert durch die Nachschaltgruppe GP.

Für das hier beschriebene Getriebe sind zwei RückwärtsgangStufen R1 und R2 vorgesehen, die wiederum durch Umschalten zwischen den Synchronisierungspaketen A und B geschaltet werden, wobei das Synchronisierungspaket F für beide Rückwärts-Gangstufen in Funktion bleibt. Es ist natürlich möglich, eine dieser Rückwärtsgang-Stufen, z. B. die Rückwärtsgang-Stufe R2, zu blockieren.

Mit der manuellen abwechselnden Schaltung der beiden Gangstufen der Vorschaltgruppe können die gesamten 12 Gänge des Getriebes in einer logischen Schaltbewegung mit abwechselnden Schaltrichtungen zügig durchgeschaltet werden.

### Bezugszeichen

- 1, 2, 3,: Gänge des Getriebes
- 4, 5, 6: (Langsam-Stufe L)
- 1', 2', 3',: Gänge des Getriebes
- 4', 5', 6': (Schnell-Stufe S)

- GV: Split- oder Vorschaltgruppe
- GH: 3-Gang-Hauptgruppe
- GP: Bereichs- bzw. Nachschaltgruppe
- A, B: Synchronisierungspakete in Vorschaltgruppe
- C, D, E, F: Synchronisierungspakete in Hauptgruppe
- GR: Gasse(n) für Rückwärtsgang
- G_{1/2}: Gasse für ersten und zweiten Gang
- G_{3/4}: Gasse für dritten und vierten Gang
- G_{5/6}: Gasse für fünften und sechsten Gang
- G_{N},: neutrale Gassen
- S1, S2, S3: Aktivierungseinrichtungen
- L: Langsam-Stufe
- s: Schnell-Stufe

## Patentansprüche

1. 12-Gang-Schaltgetriebe für Nutzfahrzeuge in 2x3x2-Bauweise, mit einer Vorschalt- oder Splitgruppe (GV), einer 3-Gang-Hauptgruppe (GH) und einer Nachschalt- bzw. Bereichsgruppe (GP) mit pneumatisch und manuell betätigten Schalteinrichtungen, **dadurch gekennzeichnet, dass** für die Vorschaltgruppe (GV) eine manuelle Schalteinrichtung mit Gangstufen für sechs Vorwärtsgänge und zumindest einen Rückwärtsgang und für die 3-Gang-Hauptgruppe (GH) und die Nachschaltgruppe (GP) pneumatische Schalteinrichtungen vorgesehen sind, und dass die pneumatischen Schalteinrichtungen beim manuellen Wechsel von einer Gangstufe zu der nächsten Gangstufe aktiviert werden.

2. Schaltgetriebe nach Anspruch 1, **dadurch gekennzeichnet, dass** für die Vorschaltgruppe (GV) eine manuelle Schalteinrichtung mit Gassen (G_{1/2}, G_{3/4}, G_{5/6}, G_{R}) für sechs Vorwärtsgänge und zumindest einen Rückwärtsgang vorgesehen ist, die bei kontinuierlich an-bzw. absteigender Gangfolge abwechselnd auf die zwei Gangstufen bzw. zwei Synchronisierungspakete (A, B) der Vorschaltgruppe (GV) zugreift, und dass in einer die einzelnen Gassen miteinander quer verbindenden neutralen Gasse (G_{N}) Aktivierungseinrichtungen (S1, S2, S3) vorgesehen sind, durch die beim Übergang von einer Gasse in die andere die pneumatische Schalteinrichtung der Hauptgruppe aktiviert wird.

3. Getriebe nach einem der vorhergehenden Ansprüche, **dadurch gekennzeichnet, dass** die Nachschaltgruppe (GP) automatisch von der Langsam- auf die Schnell-Stufe (L, S) der einzelnen Gänge schaltbar ist.

## Claims

1. 2x3x2-style 12-speed gearbox for commercial vehicles, comprising a front-mounted or splitter group (GV), a 3-speed main group (GH) and a rear-mounted or range group (GP) with pneumatically and manually operated shift devices, **characterized in that** for the front-mounted group (GV) a manual shift device with gear steps for six forward gears and at least one reverse gear is provided and for the 3-speed main group (GH) and the rear-mounted group (GP) pneumatic shift devices are provided, and that the pneumatic shift devices are activated during the manual change from one gear step to the next gear step.

2. Gearbox according to claim 1, **characterized in that** for the front-mounted group (GV) a manual shift device with gates (G_{1/2}, G_{3/4}, G_{5/6}, G_{R}) for six forward gears and at least one reverse gear is provided, which in the event of a continuously upward and/or downward gear sequence alternately accesses the two gear steps and/or two synchronizing packets (A, B) of the frontmounted group (GV), and that in a neutral gate (G_{N}), which transversely connects the individual gates to one another, activating devices (S1, S2, S3) are provided, by means of which upon the change from one gate into the other the pneumatic shift device of the main group is activated.

3. Gearbox according to one of the preceding claims, **characterized in that** the rear-mounted group (GP) is automatically shiftable from the slow to the fast step (L, S) of the individual gears.

## Revendications

1. Boîte de vitesses à 12 vitesses pour véhicules utilitaires du type 2x3x2, comprenant un groupe amont ou de division (GV), un groupe principal à 3 vitesses (GH) et un groupe aval ou de zone (GP) avec des dispositifs de changement de rapport à actionnement pneumatique et manuel, **caractérisé en ce que**, pour le groupe amont (GV), il est prévu un dispositif de changement de rapport manuel comprenant des étages de vitesses pour six vitesses de marche avant et au moins une vitesse de marche arrière et, pour le groupe principal à 3 vitesses (GH) et le groupe aval (GP), il est prévu des dispositifs de changement de rapport pneumatiques, et **en ce que** les dispositifs de changement de rapport pneumatiques sont activés lors du changement de rapport manuel qui passe d'un étage de vitesse à l'étage de vitesse suivant.

2. Boîte de vitesses selon la revendication 1, **caractérisé en ce qu'**il est prévu, pour le groupe amont (GV), un dispositif de changement de rapport manuel comportant des rainures de grille (G_{1/2}, G_{3/4}, G_{5/6}, G_{R}) pour six vitesses de marche avant et au moins une vitesse de marche arrière et qui, pour une succession de vitesses continuellement montante et descendante, utilise alternativement les deux étages de vitesse ou les deux paquets de synchronisation (A, B) du groupe amont (GV) et **en ce que**, dans une rainure de grille de point mort (G_{N}) qui relie transversalement les différentes rainures, sont prévus des dispositifs d'activation (S1, S2, S3) par lesquels le dispositif de changement de rapport du groupe principal est activé lors du passage d'une rainure à une autre.

3. Boîte de vitesses selon l'une des revendications précédentes, **caractérisé en ce que** le groupe aval (GP) peut être commuté automatiquement de l'étage lent à l'étage rapide (L, S) des différentes vitesses.
